# EUROPEAN PATENT APPLICATION

(11) **EP 4 510 410 A1**
(43) Date of publication of application: **19.02.2025**
(21) Application number: 22945151.3
(22) Date of filing: 06.06.2022
(51) Int. Cl.: H02J 3/36, H02J 3/00

(54) **METHOD FOR SUPPRESSING DIRECT-CURRENT OSCILLATION IN POWER TRANSMISSION SYSTEM AND POWER TRANSMISSION SYSTEM**

(71) Applicant: Contemporary Amperex Technology Co., Limited, Ningde, Fujian 352100 (CN)
(72) Inventor: LIANG, Liliuyuan, Ningde, Fujian 352100 (CN); YU, Dongxu, Ningde, Fujian 352100 (CN); LU, Yanhua, Ningde, Fujian 352100 (CN)
(74) Representative: Holt, Lucy Rose
(86) International application number: PCT/CN2022/097047
(87) International publication number: WO 2023/236001

(57) **Abstract**

Embodiments of the present application provide a method for suppressing direct-current oscillation in a power transmission system and the power transmission system. The power transmission system comprises a sending end VSC, a receiving end VSC, and a direct-current energy storage device, wherein the direct-current energy storage device is connected in parallel between the sending end VSC and the receiving end VSC, and the direct-current energy storage device comprises a plurality of energy storage sub-modules. The method comprises: obtaining the direct-current power oscillation quantity of the power transmission system; and according to the direct-current power oscillation quantity, controlling the number of the energy storage sub-modules, accessed to the power transmission system, of the direct-current energy storage device. According to the technical solution of the embodiments of the present application, the direct-current oscillation in the power transmission system can be effectively suppressed, such that the safe and stable operation of the power transmission system is ensured.

## Description

### TECHNICAL FIELD

The present application relates to the field of direct current power transmission, and in particular, to a method for suppressing direct current oscillation in a power transmission system and the power transmission system.

### BACKGROUND

The power transmission system based on flexible direct current technology of voltage source converter (VSC) has the advantages of flexible structure, independent control of active and reactive power, and less harmonic content of alternating current voltage output by the converter, which can effectively solve the problems of alternating current transmission system in terms of power supply reliability, operation efficiency, quality of electric energy and distributed power consumption, and is more suitable for the development of modern transmission systems.

The converter connected to an alternating current system in a flexible direct current power transmission system adopts constant power control. These power converters have the characteristic of constant power load, which will produce negative resistance, reduce system damping, make the dynamic characteristics of the system worse and even lead to system oscillation instability. In addition, the equivalent resistance of devices, such as a direct current reactor, a direct current line, a direct current capacitor in a direct current power grid is small, and external factors such as trigger delay and communication delay of converter switching apparatus may cause system oscillation. Considering the influence of the above factors on the stable operation of the system, it is necessary to take effective measures to suppress the system oscillation and ensure the safe and stable operation of the power transmission system.

### SUMMARY

The present application provides a method for suppressing direct current oscillation in a power transmission system and the power transmission system, which can effectively suppress direct current oscillation in the power transmission system and ensure safe and stable operation of the power transmission system.

According to a first aspect, a method for suppressing direct current oscillation in a power transmission system is provided. The power transmission system comprises a sending terminal VSC, a receiving terminal VSC and a direct current energy storage apparatus, wherein the direct current energy storage apparatus is connected in parallel to the sending terminal VSC and the receiving terminal VSC, and the direct current energy storage apparatus comprises a plurality of energy storage submodules. The method comprises acquiring a direct current power oscillation amount of the power transmission system; and controlling, according to the direct current power oscillation amount, the number of the direct current energy storage apparatuses connected to the energy storage submodules of the power transmission system.

In an embodiment of the present application, in the power transmission system, the direct current energy storage apparatus is connected in parallel to the sending terminal VSC and the receiving terminal VSC, a, the number of the direct current energy storage apparatuses connected to the energy storage submodules of the power transmission system is controlled according to the acquired direct current power oscillation amount of the power transmission system, such that the direct current energy storage apparatus can adjust and control the direct current power oscillation amount of the power transmission system, thereby suppressing the direct current oscillation of the power transmission system and ensuring the safe and stable operation of the power transmission system. In the present application, the direct current energy storage apparatus comprises a plurality of energy storage submodules, and the number of energy storage submodules that need to be connected to the power transmission system can be determined according to the operation state of the power transmission system, such that the direct current power oscillation amount of the power transmission system can be flexibly adjusted, and unnecessary energy waste can be avoided while suppressing the direct current oscillation of the power transmission system.

In a possible implementation, the method further comprises: acquiring a direct current voltage and a direct current power of the power transmission system, determining, according to the direct current voltage, a direct current voltage oscillation amount of the power transmission system, and determining the direct current power oscillation amount according to the direct current power.

The direct current voltage oscillation amount of the power transmission system is determined by means of the acquired direct current voltage and the direct current power oscillation amount of the power transmission system is determined by means of the acquired direct current power, which can accurately grasp the direct current voltage oscillation amount and the direct current power oscillation amount of the power transmission system, so as to grasp the operation state of the power transmission system.

In a possible implementation, controlling, according to the direct current power oscillation amount, the number of the direct current energy storage apparatuses connected to the energy storage submodules of the power transmission system comprises: controlling the direct current energy storage apparatus to switch to a control mode in case that the direct current power oscillation amount is greater than a first threshold, wherein the control mode is configured to control the number of the direct current energy storage apparatuses connected to the energy storage submodules of the power transmission system.

When the direct current power oscillation amount is greater than the first threshold, that is, when the direct current oscillation occurs in the power transmission system, the direct current energy storage apparatus is switched to the control mode to control the number of the direct current energy storage apparatuses connected to the energy storage submodules of the power transmission system, so as to adjust and control the direct current power oscillation amount of the power transmission system, thereby suppressing the direct current oscillation of the power transmission system.

In a possible implementation, controlling the direct current energy storage apparatus to switch to a control mode, the control mode is configured to control the number of the direct current energy storage apparatuses connected to the energy storage submodules of the power transmission system comprises: in case that the direct current voltage oscillation amount is greater than a second threshold, controlling the direct current energy storage apparatus to switch to a voltage control mode, and setting a first direct current voltage reference value and a first direct current power reference value in the voltage control mode, such that the direct current energy storage apparatus can adjust and control the number of the direct current energy storage apparatuses connected to the energy storage submodules of the power transmission system in the voltage control mode, so as to control a direct current voltage steady-state amount of the power transmission system to be the first direct current voltage reference value and control the direct current power oscillation amount of the power transmission system to be the first direct current power reference value, wherein the second threshold is greater than the first threshold.

When the direct current power oscillation amount is greater than the first threshold and the direct current voltage oscillation amount is greater than the second threshold, the voltage of the power transmission system is unstable while direct current oscillation occurs. The direct current energy storage apparatus is switched to a voltage control mode, that is, the voltage of the power transmission system is controlled by the direct current energy storage apparatus, and the operation state of the power transmission system is adjusted by controlling a direct current voltage steady-state amount of the power transmission system as the set first direct current voltage reference value and controlling the direct current power oscillation amount of the power transmission system as the set first direct current power reference value, thus eliminating the direct current oscillation of the power transmission system and keeping voltage stability of the power transmission system.

In a possible implementation, the method further comprises: controlling the receiving terminal VSC and the sending terminal VSC to switch to an active power control mode, and setting a second direct current power reference value in the active power control mode, such that the receiving terminal VSC and the sending terminal VSC control the direct current power steady-state amount of the power transmission system to be the second direct current power reference value.

While controlling the direct current energy storage apparatus to switch to the voltage control mode, the receiving terminal VSC and the sending terminal VSC are controlled to switch to the active power control mode, and the operation state of the power transmission system is adjusted by controlling a direct current power steady-state amount of the power transmission system as the set second direct current power reference value, so as to ensure the safe and stable operation of the power transmission system.

In a possible implementation, controlling the direct current energy storage apparatus to switch to a control mode comprises: in case that the direct current voltage oscillation amount is not greater than the second threshold, controlling the direct current energy storage apparatus to switch to a current control mode, and setting a third direct current power reference value in the current control mode, such that the direct current energy storage apparatus can adjust and control the number of the energy storage submodules put into operation in the current control mode, so as to control the direct current power oscillation amount of the power transmission system to be the third direct current power reference value.

When the direct current power oscillation amount is greater than the first threshold and the direct current voltage oscillation amount is not greater than the second threshold, the voltage of the power transmission system is stable while direct current oscillation occurs. The direct current energy storage apparatus is switched to a current control mode, and the operation state of the power transmission system is adjusted by controlling the direct current power oscillation amount of the power transmission system as a third direct current power reference value, thus eliminating the direct current oscillation of the power transmission system.

In a possible implementation, the method further comprises: controlling the receiving terminal VSC to keep the voltage control mode, and setting a second direct current voltage reference value in the voltage control mode, such that the receiving terminal VSC controls the direct current voltage steady-state amount of the power transmission system to be the second direct current voltage reference value in the voltage control mode; controlling the sending terminal VSC to keep the active power control mode, and setting a fourth direct current power reference value in the active power control mode, such that the sending terminal VSC controls the direct current power steady-state amount of the power transmission system to be the fourth direct current power reference value in the active power control mode.

While controlling the direct current energy storage apparatus to switch to the current control mode, the receiving terminal VSC is controlled to keep the voltage control mode, and the sending terminal VSC is controlled to keep the active power control mode, and the operation state of the power transmission system is adjusted by controlling the direct current voltage steady-state amount of the power transmission system to be the second direct current voltage reference value set in the voltage control mode, controlling the direct current power steady-state amount of the power transmission system to be the fourth direct current power reference value set in the active power control mode, so as to ensure the safe and stable operation of the power transmission system.

In a possible implementation, the method further comprises: controlling the direct current energy storage apparatus to keep a hot standby state in case that the direct current power oscillation amount is not greater than the first threshold.

When the direct current power oscillation amount is not greater than the first threshold, that is, when the power transmission system does not have direct current oscillation and is in normal operation, the direct current energy storage apparatus is controlled to keep the hot standby state. At this time, the direct current energy storage apparatus does not participate in the power transmission between the sending terminal VSC and the receiving terminal VSC, which will not affect the normal operation of the power transmission system and will not cause unnecessary energy waste.

In a possible implementation, determining, according to the direct current voltage, the direct current voltage oscillation amount of the power transmission system, and determining the direct current power oscillation amount according to the direct current power comprises: extracting the direct current voltage oscillation amount from the direct current voltage, and extracting the direct current power oscillation amount from the direct current power by means of low-pass filtering, high-pass filtering, amplitude compensation and power compensation.

The direct current voltage oscillation amount is extracted from the direct current voltage, and the direct current power oscillation amount is extracted from the direct current power by means of low-pass filtering, high-pass filtering, amplitude compensation and power compensation, which can accurately grasp the direct current voltage oscillation amount and the direct current power oscillation amount of the power transmission system, so as to grasp the operation state of the power transmission system.

In a possible implementation, the plurality of energy storage submodules are connected in series.

The plurality of energy storage submodules are connected in series, which can conveniently and flexibly adjust and control the number of energy storage submodules connected to the power transmission system and quickly adjust and control the operation state of the power transmission system when the direct current energy storage apparatus participates in suppressing the direct current oscillation of the power transmission system.

In a possible implementation, the energy storage submodules comprise a power module and a battery module.

The power module of the energy storage submodules can adjust and control the power of the power transmission system by controlling the switch, and the battery module can provide electric energy to adjust and control the voltage of the power transmission system, thus realizing the adjust and control of the direct current energy storage apparatus on the operation state of the power transmission system.

According to a second aspect, a power transmission system is provided, comprising a sending terminal VSC, a receiving terminal VSC, a direct current energy storage apparatus and a control module, wherein the direct current energy storage apparatus is connected in parallel to the sending terminal VSC and the receiving terminal VSC, and the direct current energy storage apparatus comprises a plurality of energy storage submodules, the control module is configured to acquire a direct current power oscillation amount of the power transmission system, and control, according to the direct current power oscillation amount, the number of the direct current energy storage apparatuses connected to the energy storage submodules of the power transmission system.

In a possible implementation, the control module is configured to acquire a direct current voltage and a direct current power of the power transmission system, determine, according to the direct current voltage, a direct current voltage oscillation amount of the power transmission system, and determine the direct current power oscillation amount according to the direct current power.

In a possible implementation, the control module is configured to control the direct current energy storage apparatus to switch to a control mode in case that the direct current power oscillation amount is greater than a first threshold, wherein the control mode is configured to control the number of the direct current energy storage apparatuses connected to the energy storage submodules of the power transmission system.

In a possible implementation, the control module is configured to in case that the direct current voltage oscillation amount is greater than a second threshold, control the direct current energy storage apparatus to switch to a voltage control mode, and set a first direct current voltage reference value and a first direct current power reference value in the voltage control mode, such that the direct current energy storage apparatus adjusts and controls the number of the direct current energy storage apparatuses connected to the energy storage submodules of the power transmission system in the voltage control mode, so as to control a direct current voltage steady-state amount of the power transmission system to be the first direct current voltage reference value and control the direct current power oscillation amount of the power transmission system to be the first direct current power reference value, wherein the second threshold is greater than the first threshold.

In a possible implementation, the control module is further configured to control the receiving terminal VSC and the sending terminal VSC to switch to an active power control mode, and set a second direct current power reference value in the active power control mode, such that the receiving terminal VSC and the sending terminal VSC control the direct current power steady-state amount of the power transmission system to be the second direct current power reference value.

In a possible implementation, the control module is configured to in case that the direct current voltage oscillation amount is not greater than the second threshold, control the direct current energy storage apparatus to switch to a current control mode, and set a third direct current power reference value in the current control mode, such that the direct current energy storage apparatus adjusts and controls the number of the energy storage submodules put into operation in the current control mode, so as to control the direct current power oscillation amount of the power transmission system to be the third direct current power reference value.

In a possible implementation, the control module is further configured to control the receiving terminal VSC to keep the voltage control mode, and set a second direct current voltage reference value in the voltage control mode, such that the receiving terminal VSC controls the direct current voltage steady-state amount of the power transmission system to be the second direct current voltage reference value in the voltage control mode; control the sending terminal VSC to keep the active power control mode, and set a fourth direct current power reference value in the active power control mode, such that the sending terminal VSC controls the direct current power steady-state amount of the power transmission system to be the fourth direct current power reference value in the active power control mode.

In a possible implementation, the control module is further configured to control the direct current energy storage apparatus to keep a hot standby state in case that the direct current power oscillation amount is not greater than the first threshold.

In a possible implementation, the control module is further configured to extract the direct current voltage oscillation amount from the direct current voltage, and extract the direct current power oscillation amount from the direct current power by means of low-pass filtering, high-pass filtering, amplitude compensation and power compensation.

In a possible implementation, the plurality of energy storage submodules are connected in series.

In a possible implementation, the energy storage submodules comprise a power module and a battery module.

According to a third aspect, an apparatus for suppressing direct current oscillation in a power transmission system is provided, comprising a processor and a memory, wherein the memory is configured to store a computer program, and the processor is configured to invoke the computer program to enable the apparatus to implement the method according to the first aspect or any possible implementation of the first aspect.

According to a fourth aspect, there is provided a readable storage medium storing a computer program which, when executed by a computing device, causes the computing device to implement the method according to the first aspect or any possible implementation of the first aspect.

According to the present application, a method for suppressing direct current oscillation in a power transmission system is provided. In the power transmission system, the direct current energy storage apparatus is connected in parallel to the sending terminal VSC and the receiving terminal VSC, the number of the direct current energy storage apparatuses connected to the energy storage submodules of the power transmission system is controlled according to the acquired direct current power oscillation amount of the power transmission system, such that the direct current energy storage apparatus can adjust and control the direct current power oscillation amount of the power transmission system, thereby suppressing the direct current oscillation of the power transmission system and ensuring the safe and stable operation of the power transmission system. In the present application, the direct current energy storage apparatus comprises a plurality of energy storage submodules, and the number of energy storage submodules that need to be connected to the power transmission system can be determined according to the operation state of the power transmission system, such that the direct current power oscillation amount of the power transmission system can be flexibly adjusted, and unnecessary energy waste can be avoided while suppressing the direct current oscillation of the power transmission system.

### BRIEF DESCRIPTION OF DRAWINGS

To describe the technical solutions in an embodiment of the present application more clearly, the following briefly describes the accompanying drawings required for describing the embodiment. Apparently, the accompanying drawings in the following description show merely some embodiments of the present application, and a person of ordinary skill in the art may still derive other drawings from accompanying drawings without creative efforts.
Fig. 1 is a schematic diagram of a power transmission system disclosed in an embodiment of the present application;
Fig. 2 is a schematic flowchart of a method for suppressing direct current oscillation in a power transmission system disclosed in an embodiment of the present application;
Fig. 3 is a schematic flowchart of a method for suppressing direct current oscillation in a power transmission system disclosed in an embodiment of the present application;
Fig. 4 is a schematic flowchart of a method for suppressing direct current oscillation in a power transmission system disclosed in an embodiment of the present application;
Fig. 5 is a schematic diagram of a direct current energy storage apparatus disclosed in an embodiment of the present application;
Fig. 6 is a schematic flowchart of a method for suppressing direct current oscillation in a power transmission system disclosed in an embodiment of the present application;
Fig. 7 is a schematic flowchart of a method for suppressing direct current oscillation in a power transmission system disclosed in an embodiment of the present application;
Fig. 8 is a schematic flowchart of a method for suppressing direct current oscillation in a power transmission system disclosed in an embodiment of the present application;
Fig. 9 is a schematic diagram of a power transmission system disclosed in an embodiment of the present application; and
Fig. 10 is a schematic diagram of an apparatus for suppressing direct current oscillation in a power transmission system disclosed in an embodiment of the present application.

In the drawings, the drawings are not drawn to actual scale.

### DESCRIPTION OF EMBODIMENTS

The following further describes the implementations of the present application in detail with reference to the accompanying drawings and embodiments. Detailed description of the following embodiments and accompanying drawings are used to illustratively state the principles of the present application, but not to limit the scope of the present application, that is, the present application is not limited to the embodiments described.

In the description of the present application, it should be noted that, unless otherwise specified, "a plurality of' means two or more, the orientations or positional relationships indicated by the terms "upper", "lower", "left", "right", "inside", "outside", and the like are merely to facilitate the description of the present application and simplify the description, instead of indicating or implying that the indicated apparatus or element must have particular orientations or be constructed and operated in particular orientations, and cannot be construed as limiting the present application. In addition, the terms "first", "second", "third" and the like are merely intended for a purpose of description, and cannot be understood as indicating or implying relative importance. "Vertical" is not vertical in the strict sense, but within the allowable range of error. "Parallel" is not parallel in the strict sense, but within the allowable range of error.

"Embodiments" mentioned in the present application mean that specific features, structures or features described in embodiments combined can be comprised in at least one embodiment of the present application. The phrase appearing at each position of the description does not necessarily indicate the same embodiment and it is not an exclusively independent or alternative embodiment of other embodiments. A person skilled in the art understands implicitly and explicitly that embodiments described in the present application can be combined with other embodiments.

The directional terms appearing in the following description are all the directions shown in the figure, and are not intended to limit the specific structure of the present application. In the description of the present application, it should also be noted that, unless otherwise expressly specified and defined, the terms such as "install", "connect", "connected to" should be understood in a broad sense. For example, may be a fixed connection, may be a detachable connection, or an integrated connection; and may be a direct connection, or an indirect connection through an intermediate medium. A person of ordinary skill in the art can understand specific meanings of these terms in the present application based on specific situations.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

The novel power system with new energy as the main body is becoming an important choice for sustainable energy development. The power transmission system based on VSC flexible direct current technology has the advantages of flexible structure, independent control of active power and reactive power, power supply for weak power grid and less harmonic content of alternating current voltage output by the converter, which has become the main direction of large-scale long-distance new energy transmission.

The converter connected to an alternating current system in a flexible direct current power transmission system adopts constant power control. These power converters have the characteristic of constant power load, which will produce negative resistance, reduce system damping, make the dynamic characteristics of the system worse and even lead to system oscillation instability. In addition, the equivalent resistance of devices, such as a direct current reactor, a direct current line, a direct current capacitor in a direct current power grid is small, and external factors such as trigger delay and communication delay of converter switching apparatus may cause system oscillation. Considering the influence of the above factors on the stable operation of the system, it is necessary to take effective measures to suppress the system oscillation and ensure the safe and stable operation of the power transmission system.

In view of this, the present application provides a method for suppressing direct current oscillation in a power transmission system. In the power transmission system, the direct current energy storage apparatus is connected in parallel to the sending terminal VSC and the receiving terminal VSC, and the direct current energy storage apparatus comprises a plurality of energy storage submodules. The number of the direct current energy storage apparatuses connected to the energy storage submodules of the power transmission system is controlled according to the acquired direct current power oscillation amount of the power transmission system, such that the direct current energy storage apparatus can adjust and control the direct current power oscillation amount of the power transmission system, thereby suppressing the direct current oscillation of the power transmission system and ensuring the safe and stable operation of the power transmission system. In the present application, the direct current energy storage apparatus comprises a plurality of energy storage submodules, and the number of energy storage submodules that need to be connected to the power transmission system can be determined according to the operation state of the power transmission system, such that the direct current power oscillation amount of the power transmission system can be flexibly adjusted, and unnecessary energy waste can be avoided while suppressing the direct current oscillation of the power transmission system.

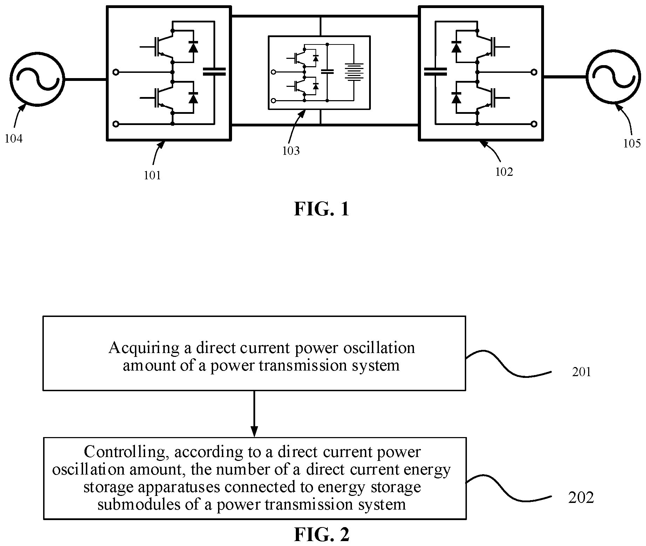

Fig. 1 is a schematic diagram of a power transmission system 100 provided by the present application.

As shown in Fig. 1, the power transmission system 100 comprises a sending terminal VSC101, a receiving terminal VSC102 and a direct current energy storage apparatus 103.

One side of the sending terminal VSC101 is connected to the sending terminal power grid 104, receives the alternating current output from the sending terminal power grid 104, and converts the alternating current into direct current. The other side of the sending terminal VSC101 is connected to the direct current circuit of the power transmission system 100, and transmits the direct current to the direct current circuit of the power transmission system 100.

One side of the receiving terminal VSC102 is connected to the direct current circuit of the power transmission system 100, receives the direct current transmitted by the direct current circuit of the power transmission system 100, and converts the direct current into alternating current. The other side of the receiving terminal VSC102 is connected to the receiving terminal power grid 105, and transmits the alternating current to the receiving terminal power grid 105.

The direct current energy storage apparatus 103 is connected in parallel between the sending terminal VSC101 and the receiving terminal VSC102, and comprises a plurality of energy storage submodules.

Fig. 2 is a schematic flowchart of a method for suppressing direct current oscillation in a power transmission system disclosed in an embodiment of the present application. The power transmission system may be the power transmission system 100 in Fig. 1.

At 201, acquiring a direct current power oscillation amount of a power transmission system.

At 202, controlling, according to the direct current power oscillation amount, the number of the direct current energy storage apparatuses connected to the energy storage submodules of the power transmission system.

According to the direct current power oscillation amount, the operation condition of the power transmission system is grasped, and the number of the direct current energy storage apparatuses connected to the energy storage submodules of the power transmission system is controlled according to the requirement of adjusting the operation state of the power transmission system, so that the direct current energy storage apparatus can adjust the operation state of the power transmission system and suppress the direct current oscillation of the power transmission system.

In an embodiment of the present application, in the power transmission system, the direct current energy storage apparatus is connected in parallel to the sending terminal VSC and the receiving terminal VSC, and the number of the direct current energy storage apparatuses connected to the energy storage submodules of the power transmission system is controlled according to the acquired direct current power oscillation amount of the power transmission system, such that the direct current energy storage apparatus can adjust and control the direct current power oscillation amount of the power transmission system, thereby suppressing the direct current oscillation of the power transmission system and ensuring the safe and stable operation of the power transmission system. In the present application, the direct current energy storage apparatus comprises a plurality of energy storage submodules, and the number of energy storage submodules that need to be connected to the power transmission system can be determined according to the operation state of the power transmission system, such that the direct current power oscillation amount of the power transmission system can be flexibly adjusted, and unnecessary energy waste can be avoided while suppressing the direct current oscillation of the power transmission system.

Alternatively, in the embodiment of the present application, the direct current voltage and the direct current power of the power transmission system are acquired, the direct current voltage oscillation amount of the power transmission system is determined according to the direct current voltage, and the direct current power oscillation amount of the power transmission system is determined according to the direct current power.

The direct current voltage of the power transmission system can be acquired by means of measuring a voltage sensor, and the direct current power can be acquired by means of measuring a power meter.

Specifically, the direct current voltage oscillation amount can be extracted from the direct current voltage and the direct current power oscillation amount can be extracted from the direct current power by means of low-pass filtering, high-pass filtering, amplitude compensation and power compensation.

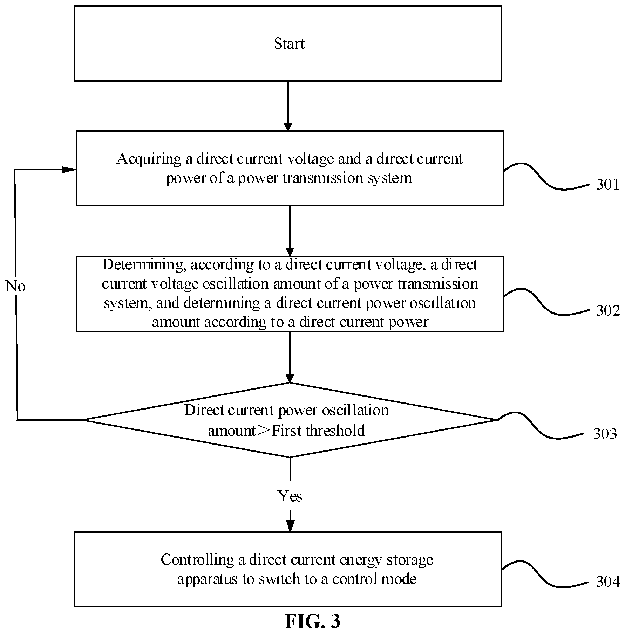

Fig. 3 is a schematic flowchart of a method for suppressing direct current oscillation in a power transmission system disclosed in another embodiment of the present application.

At 301, acquiring a direct current voltage and a direct current power of a power transmission system.

At 302, determining, according to a direct current voltage, a direct current voltage oscillation amount of a power transmission system, and determining a direct current power oscillation amount according to a direct current power.

At 303, determining whether a direct current power oscillation amount is greater than a first threshold.

At 304, controlling a direct current energy storage apparatus to switch to a control mode in case that a direct current power oscillation amount is greater than a first threshold.

The first threshold refers to a power parameter preset by the power transmission system. The direct current energy storage apparatus is controlled to switch to the control mode when the direct current power oscillation amount is greater than the first threshold. When the direct current energy storage apparatus is switched to the control mode, the direct current energy storage apparatus participates in the power transmission between the sending terminal VSC and the receiving terminal VSC, and can adjust and control the operation state of the power transmission system. The power parameter of the first threshold comprises a fixed value, a modifiable value, a value determined in a table look-up method, and a value determined by a function relationship, which is not limited by the embodiment of the present application. The first threshold can be the maximum direct current power oscillation amount of the power transmission system without direct current oscillation occurring.

When the direct current power oscillation amount is greater than a first threshold, the direct current energy storage apparatus is controlled to switch to a control mode, wherein the control mode is configured to control the number of the direct current energy storage apparatuses connected to the energy storage submodules of the power transmission system, and when the direct current power oscillation amount is not greater than the first threshold, the direct current energy storage apparatus is controlled to keep the hot standby state. At this time, the direct current energy storage apparatus does not participate in the power transmission between the sending terminal VSC and the receiving terminal VSC, which will not affect the normal operation of the power transmission system and will not cause unnecessary energy waste.

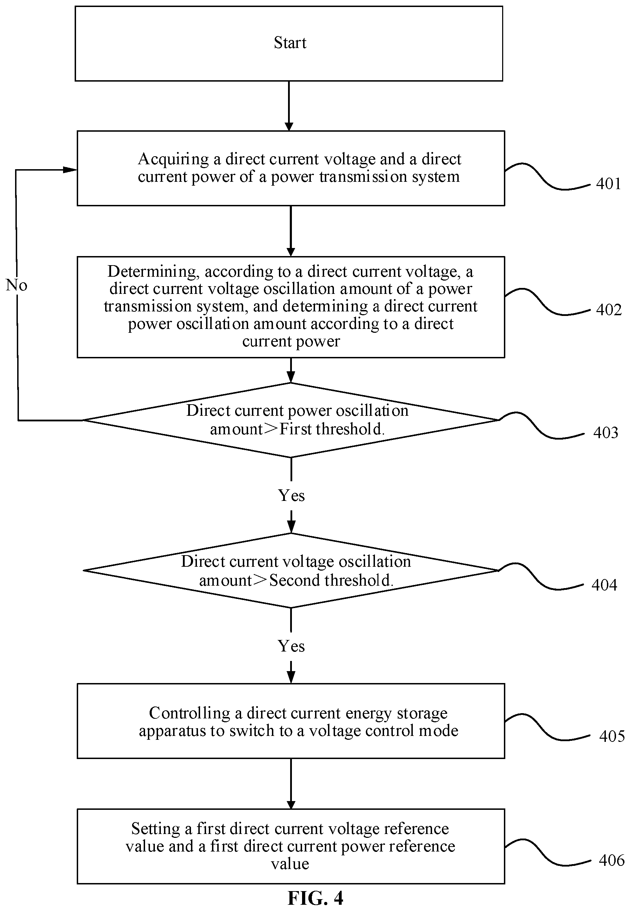

Alternatively, in an embodiment of the present application, the control mode of the direct current energy storage apparatus can be a voltage control mode. Specifically, the direct current energy storage apparatus is controlled to switch to the voltage control mode in case that the direct current power oscillation amount is greater than the first threshold and the direct current voltage oscillation amount is greater than the second threshold. Referring to Fig. 4, which is a schematic flowchart of a method for suppressing direct current oscillation in a power transmission system disclosed in an embodiment of the present application. The steps 401-403 in Fig. 4 are similar to the steps 301-303 in the previous embodiment, reference may be made to the previous embodiment, and for brevity, details are not described herein again.

At 404, determining whether the direct current voltage oscillation amount is greater than a second threshold in case that the direct current power oscillation is greater than the first threshold.

At 405, controlling the direct current energy storage apparatus to switch to a voltage control mode in case that the direct current voltage oscillation amount is greater than the second threshold.

The second threshold refers to a voltage parameter preset by the power transmission system. The direct current energy storage apparatus is controlled to switch to the voltage control mode when the direct current voltage oscillation amount is greater than the second threshold. The voltage parameter of the second threshold comprises a fixed value, a modifiable value, a value determined in a table look-up method, and a value determined by a function relationship, which is not limited by the embodiment of the present application. The second threshold can be the maximum direct current voltage oscillation amount that the voltage of the power transmission system keeps a steady state.

At 406, setting the first direct current voltage reference value and the first direct current power reference value.

The first direct current voltage reference value and the first direct current power reference value refer to the voltage parameter and the power parameter set by the power transmission system, and the direct current voltage steady-state amount of the power transmission system is controlled as the first direct current voltage reference value, and the direct current power oscillation amount of the power transmission system is controlled as the first direct current power reference value, such that the power transmission system can operate normally and stably.

When the direct current power oscillation amount is greater than the first threshold and the direct current voltage oscillation amount is greater than the second threshold, the voltage of the power transmission system is unstable while direct current oscillation occurs. The direct current energy storage apparatus is switched to a voltage control mode, that is, the voltage of the power transmission system is controlled by the direct current energy storage apparatus, and the operation state of the power transmission system is adjusted by controlling a direct current voltage steady-state amount of the power transmission system as the set first direct current voltage reference value and controlling the direct current power oscillation amount of the power transmission system as the set first direct current power reference value, thus eliminating the direct current oscillation of the power transmission system and keeping voltage stability of the power transmission system.

Alternatively, in an embodiment of the present application, the number of the direct current energy storage apparatuses connected to the energy storage submodules of the power transmission system can be adjusted and controlled by means of the direct current energy storage apparatus in the voltage control mode, so as to control a direct current voltage steady-state amount of the power transmission system to be the first direct current voltage reference value and control the direct current power oscillation amount of the power transmission system to be the first direct current power reference value.

Specifically, after setting the first direct current voltage reference value and the first direct current power reference value, the number value of energy storage submodules of the direct current energy storage apparatus that needs to be connected to the power transmission system is calculated according to the first direct current voltage reference value and the first direct current power reference value, and the direct current energy storage apparatus controls the number of energy storage submodules connected to the power transmission system according to the number value, such that the direct current voltage steady-state amount of the power transmission system is the set first direct current voltage reference value, and the direct current power oscillation amount of the power transmission system is the set first direct current power reference value.

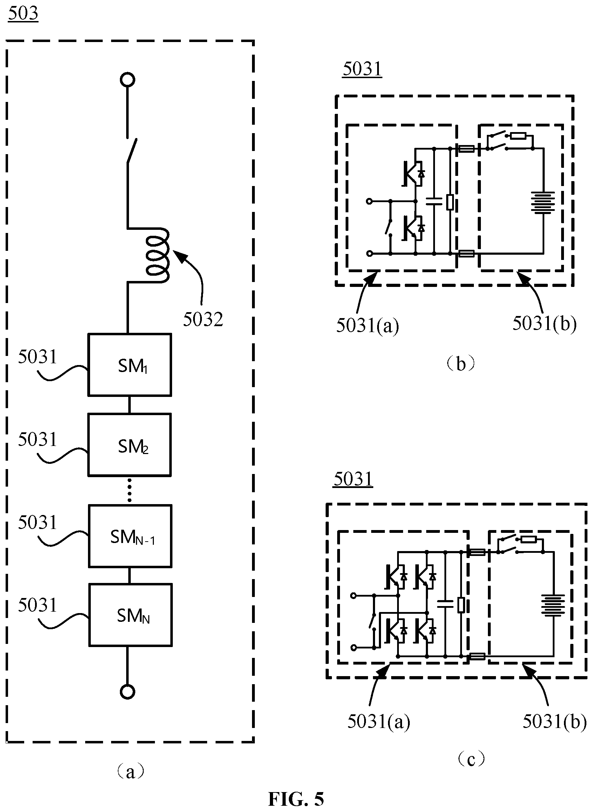

Specifically, as shown in Fig. 5 (a), the direct current energy storage apparatus 503 comprises a plurality of energy storage submodules 5031, where the plurality of energy storage submodules 5031 are connected in series. As shown in (b) and (c) in Fig. 5, the energy storage submodules 5031 comprise a power module 5031(a) and a battery module 5031(b), where the power module 5031(a) and the battery module 5031(b) are connected in parallel. The power module 5031(a) can adjust and control the power of the power transmission system by controlling the switch, and the battery module 5031(b) can provide electric energy to adjust and control the voltage of the power transmission system, thus realizing the adjust and control of the operation state of the power transmission system by the direct current energy storage apparatus 503.

The number of energy storage submodules 5031 that need to be connected to the power transmission system is determined according to the operation state of the power transmission system, such that the direct current power oscillation amount and the direct current voltage steady-state amount of the power transmission system can be flexibly adjusted, and unnecessary energy waste can be avoided while suppressing the direct current oscillation of the power transmission system.

Alternatively, the direct current energy storage apparatus 503 may also comprise elements such as a reactor 5032, which is not limited in the present application.

Alternatively, the power module 5031(a) of the energy storage submodules 5031 can be a power module composed of insulated gate bipolar transistor (IGBT), and the IGBT power module has the advantages of large input impedance, small driving power, simple control circuit, small switching loss, fast on-off speed, high working frequency, large element capacity and the like. It should be understood that the IGBT power module mentioned above is only an illustrative example, and does not constitute a limitation of the present application. The power module 5031(a) of the energy storage submodules 5031 in the present application can also be other types of power modules. Further, the power module 5031(a) may be a full-bridge power module, as shown in (c) in Fig. 5, or a half-bridge power module, as shown in (b) in Fig. 5.

Alternatively, the battery module 5031(b) of the energy storage submodules 5031 may be a single-branch series battery module or a multi-branch parallel battery module, which is not limited in the present application.

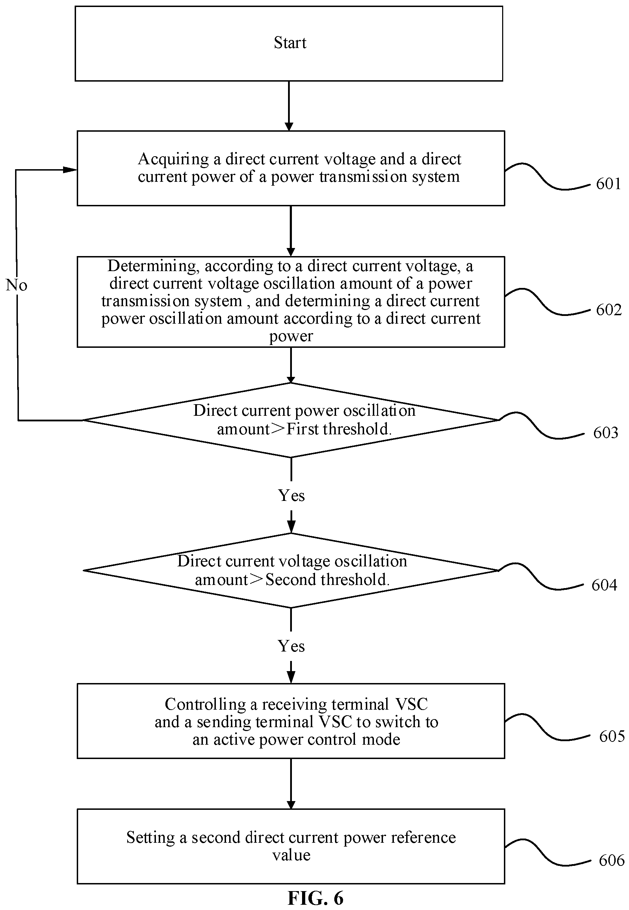

Alternatively, in an embodiment of the present application, the receiving terminal VSC and the sending terminal VSC are also controlled to switch to the active power control mode in case that the direct current voltage oscillation amount is greater than the second threshold. Referring to Fig. 6, which is a schematic flowchart of a method for suppressing direct current oscillation in a power transmission system disclosed in an embodiment of the present application. The steps 601-604 in Fig. 6 are similar to the steps 401-404 in the previous embodiment, reference may be made to the previous embodiment, and for brevity, details are not described herein again.

At 605, controlling the receiving terminal VSC and the sending terminal VSC to switch to the active power control mode in case that the direct current voltage oscillation amount is greater than the second threshold.

At 606, setting a second direct current power reference value.

The second direct current power reference value refers to the power parameter set by the power transmission system, while controlling the direct current voltage steady-state amount of the power transmission system as the first direct current voltage reference value, controlling the direct current power oscillation amount of the power transmission system as the first direct current power reference value, the direct current power steady-state amount of the power transmission system is controlled as the second direct current power reference value, such that the power transmission system can operate normally and stably.

While controlling the direct current energy storage apparatus to switch to the voltage control mode, the receiving terminal VSC and the sending terminal VSC are controlled to switch to the active power control mode, and the operation state of the power transmission system is adjusted by controlling a direct current power steady-state amount of the power transmission system as the set second direct current power reference value, so as to ensure the safe and stable operation of the power transmission system.

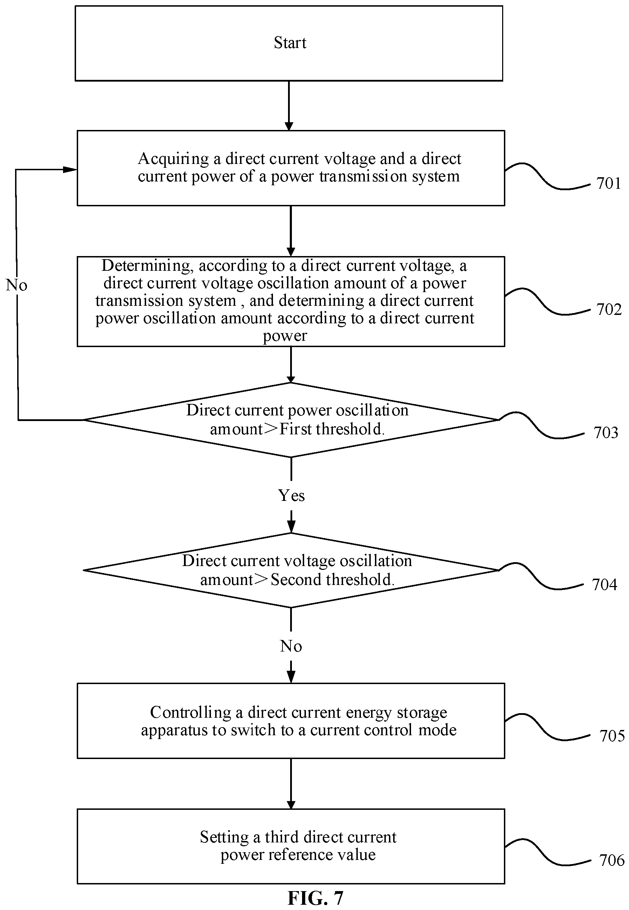

Alternatively, in an embodiment of the present application, the control mode of the direct current energy storage apparatus can be a current control mode. Specifically, the direct current energy storage apparatus is controlled to switch to the current control mode in case that the direct current power oscillation amount is greater than the first threshold and the direct current voltage oscillation amount is greater than the second threshold. Referring to Fig. 7, which is a schematic flowchart of a method for suppressing direct current oscillation in a power transmission system disclosed in an embodiment of the present application. The steps 701-704 in Fig. 7 are similar to the steps 601-604 in the previous embodiment, reference may be made to the previous embodiment, and for brevity, details are not described herein again.

At 705, controlling the direct current energy storage apparatus to switch to a current control mode in case that the direct current voltage oscillation amount is not greater than the second threshold.

At 706, setting the third direct current power reference value.

The third direct current power reference value refers to the power parameter set by the power transmission system, and the direct current power oscillation amount of the power transmission system is controlled as the third direct current power reference value, such that the power transmission system can operate normally and stably.

When the direct current power oscillation amount is greater than the first threshold and the direct current voltage oscillation amount is not greater than the second threshold, the voltage of the power transmission system is stable while direct current oscillation occurs. The direct current energy storage apparatus is switched to a current control mode, and the operation state of the power transmission system is adjusted by controlling the direct current power oscillation amount of the power transmission system as a third direct current power reference value, thus eliminating the direct current oscillation of the power transmission system.

Alternatively, in an embodiment of the present application, the number of the direct current energy storage apparatuses connected to the energy storage submodules of the power transmission system can be adjusted and controlled by means of the direct current energy storage apparatus in the current control mode, so as to control the direct current power oscillation amount of the power transmission system to be the third direct current power reference value. The detailed description of the direct current energy storage apparatus can refer to the aforementioned embodiments, and will not be repeated here for brevity.

Specifically, after setting the third direct current power reference value, the number value of energy storage submodules of the direct current energy storage apparatus that needs to be connected to the power transmission system is calculated according to the third direct current power reference value, and the direct current energy storage apparatus controls the number of energy storage submodules connected to the power transmission system according to the number value, such that the direct current power oscillation amount of the power transmission system is the third direct current power reference value.

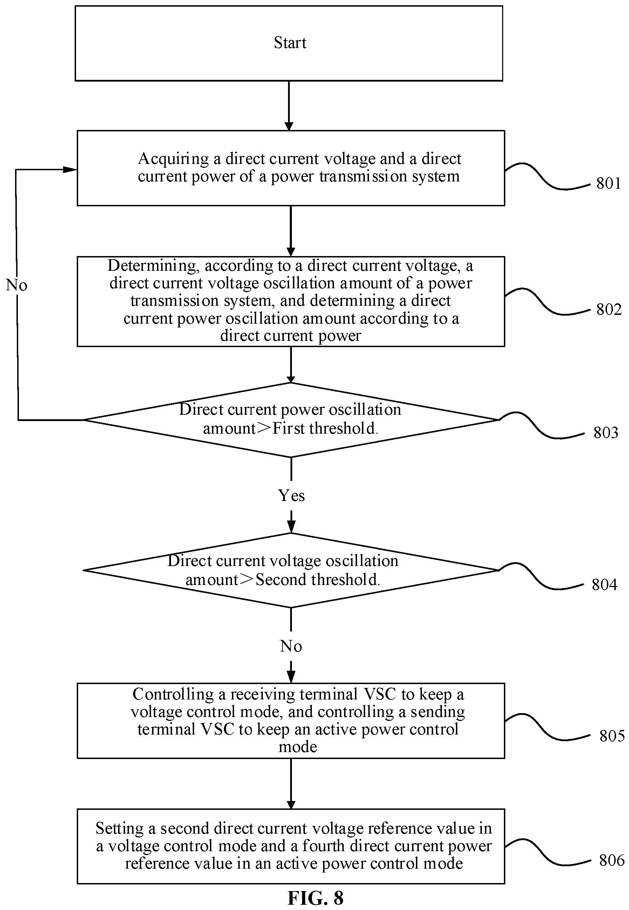

Alternatively, in an embodiment of the present application, the receiving terminal VSC is also controlled to keep the voltage control mode and the sending terminal VSC is controlled to keep the active power control mode in case that the direct current voltage oscillation amount is not greater than the second threshold. Referring to Fig. 8, which is a schematic flowchart of a method for suppressing direct current oscillation in a power transmission system disclosed in an embodiment of the present application. The steps 801-804 in Fig. 8 are similar to the steps 701-704 in the previous embodiment, reference may be made to the previous embodiment, and for brevity, details are not described herein again.

At 805, controlling the receiving terminal VSC keep the voltage control mode and the sending terminal VSC keep the active power control mode in case that the direct current voltage oscillation amount is not greater than the second threshold.

At 806, setting a second direct current voltage reference value in a voltage control mode and a fourth direct current power reference value in an active power control mode.

The second direct current voltage reference value and the fourth direct current power reference value refer to the voltage parameter and the power parameter set by the power transmission system, the direct current voltage steady-state amount of the power transmission system is controlled as the second direct current voltage reference value, and the direct current power steady-state amount of the power transmission system is controlled as the fourth direct current power reference value, while controlling the direct current power oscillation amount of the power transmission system as the third direct current power reference value, such that the power transmission system can operate normally and stably.

While controlling the direct current energy storage apparatus to switch to the current control mode, the receiving terminal VSC is controlled to keep the voltage control mode, and the sending terminal VSC is controlled to keep the active power control mode, and the operation state of the power transmission system is adjusted by controlling the direct current voltage steady-state amount of the power transmission system to be the second direct current voltage reference value set in the voltage control mode, controlling the direct current power steady-state amount of the power transmission system to be the fourth direct current power reference value set in the active power control mode, so as to ensure the safe and stable operation of the power transmission system.

The foregoing describes the method for suppressing direct current oscillation in a power transmission system according to the embodiment of the present application, and the power transmission system according to the embodiment of the present application will be described below. For the parts not described in detail, please refer to the foregoing embodiments.

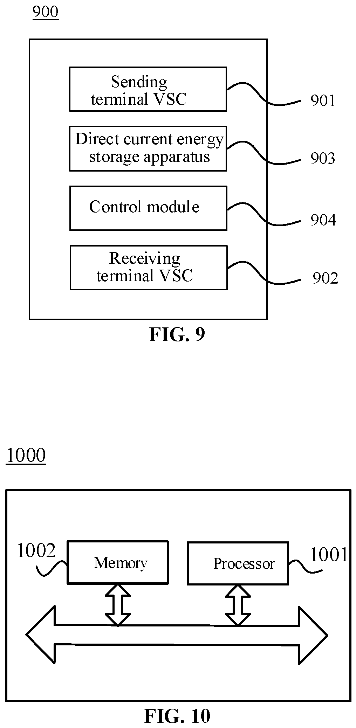

Fig. 9 is a schematic diagram of a power transmission system 900 disclosed in an embodiment of the present application. In the embodiment of the present application, the power transmission system 900 may comprise a sending terminal VSC 901, a receiving terminal VSC 902, a direct current energy storage apparatus 903 and a control module 904.

The direct current energy storage apparatus 903 is connected in parallel to the sending terminal VSC 901 and the receiving terminal VSC 902, and the direct current energy storage apparatus 903 comprises a plurality of energy storage submodules.

The control module 904 is configured to acquire a direct current power oscillation amount of the power transmission system 900, and control, according to the direct current power oscillation amount, the number of the direct current energy storage apparatuses 903 connected to the energy storage submodules of the power transmission system 900.

In the power transmission system 900, the direct current energy storage apparatus 903 is connected in parallel to the sending terminal VSC 901 and the receiving terminal VSC 902, controls, according to the acquired direct current power oscillation amount of the power transmission system 900, the number of the direct current energy storage apparatuses 903 connected to the energy storage submodules of the power transmission system 900, such that the direct current energy storage apparatus 903 can adjust and control the direct current power oscillation amount of the power transmission system 900, thereby suppressing the direct current oscillation of the power transmission system 900 and ensuring the safe and stable operation of the power transmission system 900. In the present application, the direct current energy storage apparatus 903 comprises a plurality of energy storage submodules, and the number of energy storage submodules that need to be connected to the power transmission system 900 is determined according to the operation state of the power transmission system 900, such that the direct current power oscillation amount of the power transmission system 900 can be flexibly adjusted, and unnecessary energy waste can be avoided while suppressing the direct current oscillation of the power transmission system 900.

Alternatively, in some embodiments of the present application, the control module 904 acquires a direct current voltage and a direct current power of a power transmission system 900, determines, according to the direct current voltage, a direct current voltage oscillation amount of the power transmission system 900, and determine the direct current power oscillation amount of the power transmission system 900 according to the direct current power.

Alternatively, in some embodiments of the present application, the control module 904 controls the direct current energy storage apparatus 903 to switch to a control mode in case that the direct current power oscillation amount is greater than a first threshold, wherein the control mode is configured to control the number of the direct current energy storage apparatuses connected to the energy storage submodules of the power transmission system.

Alternatively, in some embodiments of the present application, in case that the direct current voltage oscillation amount is greater than a second threshold, the control module 904 controls the direct current energy storage apparatus 903 to switch to a voltage control mode and sets a first direct current voltage reference value and a first direct current power reference value in the voltage control mode, such that the direct current energy storage apparatus 903 adjusts and controls the number of the direct current energy storage apparatuses 903 connected to the energy storage submodules of the power transmission system 900 in the voltage control mode, so as to control a direct current voltage steady-state amount of the power transmission system 900 to be the first direct current voltage reference value and control the direct current power oscillation amount of the power transmission system 900 to be the first direct current power reference value, wherein the second threshold is greater than the first threshold.

Alternatively, in some embodiments of the present application, in case that the direct current voltage oscillation amount is greater than a second threshold, the control module 904 controls the receiving terminal VSC 902 and the sending terminal VSC 901 to switch to an active power control mode and sets a second direct current power reference value in the active power control mode, such that the receiving terminal VSC 902 and the sending terminal VSC901 control the direct current power steady-state amount of the power transmission system 900 to be the second direct current power reference value.

Alternatively, in some embodiments of the present application, in case that the direct current voltage oscillation amount is not greater than the second threshold, the control module 904 controls the direct current energy storage apparatus 903 to switch to a current control mode, and sets a third direct current power reference value in the current control mode, such that the direct current energy storage apparatus 903 adjusts and controls the number of the energy storage submodules put into operation in the current control mode, so as to control the direct current power oscillation amount of the power transmission system 900 to be the third direct current power reference value.

Alternatively, in some embodiments of the present application, in case that the direct current voltage oscillation amount is not greater than the second threshold, the control module 904 controls the receiving terminal VSC 902 to keep the voltage control mode, and sets a second direct current voltage reference value in the voltage control mode, such that the receiving terminal VSC 902 controls the direct current voltage steady-state amount of the power transmission system 900 to be the second direct current voltage reference value in the voltage control mode; and controls the sending terminal VSC 901 to keep the active power control mode, and sets a fourth direct current power reference value in the active power control mode, such that the sending terminal VSC 901 controls the direct current power steady-state amount of the power transmission system 900 to be the fourth direct current power reference value in the active power control mode.

Alternatively, in some embodiments of the present application, the control module 904 controls the direct current energy storage apparatus 903 to keep a hot standby state in case that the direct current power oscillation amount is not greater than the first threshold.

Alternatively, in some embodiments of the present application, the control module 904 extracts the direct current voltage oscillation amount from the direct current voltage, and extracts the direct current power oscillation amount from the direct current power by means of low-pass filtering, high-pass filtering, amplitude compensation and power compensation.

Alternatively, in some embodiments of the present application, a plurality of energy storage submodules are connected in series.

Alternatively, in some embodiments of the present application, the energy storage submodules comprise a power module and a battery module.

An embodiment of the present application also provides an apparatus 1000 for suppressing direct current oscillation in a power transmission system. As shown in Fig. 10, the apparatus 1000 comprises a processor 1001 and a memory 1002, wherein the memory 1002 is configured to store a computer program, and the processor 1001 is configured to invoke the computer program to enable the apparatus to implement the methods of various embodiments of the present application.

An embodiment of the present application also provides a readable storage medium for storing a computer program, which, when executed by a computing device, causes the computing device to implement the methods of various embodiments of the present application.

Although the present application has been described with reference to preferred embodiments, various improvements can be made thereto and equivalents can be used for replacement of members therein without departing from the scope of the present application. In particular, as long as there is no structural conflict, the technical features mentioned in each embodiment can be combined in any way. The present application is not restricted to particular embodiments disclosed herein, but to comprise all technical solutions falling in the scope of the claims.

## Claims

1. A method for suppressing direct current oscillation in a power transmission system, wherein the power transmission system comprises a sending terminal voltage source converter (VSC), a receiving terminal VSC and a direct current energy storage apparatus,
wherein the direct current energy storage apparatus is connected in parallel to the sending terminal VSC and the receiving terminal VSC, and the direct current energy storage apparatus comprises a plurality of energy storage submodules;
the method comprises:
acquiring a direct current power oscillation amount of the power transmission system; and
controlling, according to the direct current power oscillation amount, the number of the direct current energy storage apparatuses connected to the energy storage submodules of the power transmission system.

2. The method according to claim 1, wherein the method comprises:
acquiring a direct current voltage and a direct current power of the power transmission system;
determining, according to the direct current voltage, a direct current voltage oscillation amount of the power transmission system, and determining the direct current power oscillation amount according to the direct current power.

3. The method according to claim 1 or 2, wherein controlling, according to the direct current power oscillation amount, the number of the direct current energy storage apparatuses connected to the energy storage submodules of the power transmission system comprises:
controlling the direct current energy storage apparatus to switch to a control mode in case that the direct current power oscillation amount is greater than a first threshold, wherein the control mode is configured to control the number of the direct current energy storage apparatuses connected to the energy storage submodules of the power transmission system.

4. The method according to claim 3, wherein controlling the direct current energy storage apparatus to switch to a control mode, wherein the control mode is configured to control the number of the direct current energy storage apparatuses connected to the energy storage submodules of the power transmission system comprises:
in case that the direct current voltage oscillation amount is greater than a second threshold, controlling the direct current energy storage apparatus to switch to a voltage control mode, and setting a first direct current voltage reference value and a first direct current power reference value in the voltage control mode, such that the direct current energy storage apparatus can adjust and control the number of the direct current energy storage apparatuses connected to the energy storage submodules of the power transmission system in the voltage control mode, so as to control a direct current voltage steady-state amount of the power transmission system to be the first direct current voltage reference value and control the direct current power oscillation amount of the power transmission system to be the first direct current power reference value, wherein the second threshold is greater than the first threshold.

5. The method according to claim 4, wherein the method comprises:
controlling the receiving terminal VSC and the sending terminal VSC to switch to an active power control mode, and setting a second direct current power reference value in the active power control mode, such that the receiving terminal VSC and the sending terminal VSC control the direct current power steady-state amount of the power transmission system to be the second direct current power reference value.

6. The method according to any one of claims 3 to 5, wherein controlling the direct current energy storage apparatus to switch to a control mode comprises:
in case that the direct current voltage oscillation amount is not greater than the second threshold, controlling the direct current energy storage apparatus to switch to a current control mode, and setting a third direct current power reference value in the current control mode, such that the direct current energy storage apparatus can adjust and control the number of the energy storage submodules put into operation in the current control mode, so as to control the direct current power oscillation amount of the power transmission system to be the third direct current power reference value.

7. The method according to claim 6, wherein the method comprises:
controlling the receiving terminal VSC to keep the voltage control mode, and setting a second direct current voltage reference value in the voltage control mode, such that the receiving terminal VSC controls the direct current voltage steady-state amount of the power transmission system to be the second direct current voltage reference value in the voltage control mode; and
controlling the sending terminal VSC to keep the active power control mode, and setting a fourth direct current power reference value in the active power control mode, such that the sending terminal VSC controls the direct current power steady-state amount of the power transmission system to be the fourth direct current power reference value in the active power control mode.

8. The method according to any one of claims 3 to 7, wherein the method further comprises:
controlling the direct current energy storage apparatus to keep a hot standby state in case that the direct current power oscillation amount is not greater than the first threshold.

9. The method according to any one of claims 2 to 8, wherein determining, according to the direct current voltage, the direct current voltage oscillation amount of the power transmission system, and determining the direct current power oscillation amount according to the direct current power comprises:
extracting the direct current voltage oscillation amount from the direct current voltage, and extracting the direct current power oscillation amount from the direct current power by means of low-pass filtering, high-pass filtering, amplitude compensation and power compensation.

10. The method according to any one of claims 1 to 9, wherein the plurality of energy storage submodules are connected in series.

11. The method according to any one of claims 1 to 10, wherein the energy storage submodules comprise a power module and a battery module.

12. A power transmission system, comprising: a sending terminal voltage source converter (VSC), a receiving terminal VSC, a direct current energy storage apparatus and a control module,
wherein the direct current energy storage apparatus is connected in parallel to the sending terminal VSC and the receiving terminal VSC, and the direct current energy storage apparatus comprises a plurality of energy storage submodules; and
the control module is configured to acquire a direct current power oscillation amount of the power transmission system, and control, according to the direct current power oscillation amount, the number of the direct current energy storage apparatuses connected to the energy storage submodules of the power transmission system.

13. The power transmission system according to claim 12, wherein the control module is configured to:
acquire a direct current voltage and a direct current power of the power transmission system;
determine, according to the direct current voltage, a direct current voltage oscillation amount of the power transmission system, and determine the direct current power oscillation amount according to the direct current power.

14. The power transmission system according to claim 12 or 13, wherein the control module is configured to:
control the direct current energy storage apparatus to switch to a control mode in case that the direct current power oscillation amount is greater than a first threshold, wherein the control mode is configured to control the number of the direct current energy storage apparatuses connected to the energy storage submodules of the power transmission system.

15. The power transmission system according to claim 14, wherein the control module is configured to:
in case that the direct current voltage oscillation amount is greater than a second threshold, control the direct current energy storage apparatus to switch to a voltage control mode, and set a first direct current voltage reference value and a first direct current power reference value in the voltage control mode, such that the direct current energy storage apparatus can adjust and control the number of the direct current energy storage apparatuses connected to the energy storage submodules of the power transmission system in the voltage control mode, so as to control a direct current voltage steady-state amount of the power transmission system to be the first direct current voltage reference value and control the direct current power oscillation amount of the power transmission system to be the first direct current power reference value, wherein the second threshold is greater than the first threshold.

16. The power transmission system according to claim 15, wherein the control module is further configured to:
control the receiving terminal VSC and the sending terminal VSC to switch to an active power control mode, and set a second direct current power reference value in the active power control mode, such that the receiving terminal VSC and the sending terminal VSC control the direct current power steady-state amount of the power transmission system to be the second direct current power reference value.

17. The power transmission system according to any one of claims 14 to 16, wherein the control module is configured to:
in case that the direct current voltage oscillation amount is not greater than the second threshold, control the direct current energy storage apparatus to switch to a current control mode, and set a third direct current power reference value in the current control mode, such that the direct current energy storage apparatus can adjust and control the number of the energy storage submodules put into operation in the current control mode, so as to control the direct current power oscillation amount of the power transmission system to be the third direct current power reference value.

18. The power transmission system according to claim 17, wherein the control module is further configured to:
control the receiving terminal VSC to keep the voltage control mode, and set a second direct current voltage reference value in the voltage control mode, such that the receiving terminal VSC controls the direct current voltage steady-state amount of the power transmission system to be the second direct current voltage reference value in the voltage control mode; and
control the sending terminal VSC to keep the active power control mode, and set a fourth direct current power reference value in the active power control mode, such that the sending terminal VSC controls the direct current power steady-state amount of the power transmission system to be the fourth direct current power reference value in the active power control mode.

19. The power transmission system according to any one of claims 14 to 18, wherein the control module is further configured to:
control the direct current energy storage apparatus to keep a hot standby state in case that the direct current power oscillation amount is not greater than the first threshold.

20. The power transmission system according to any one of claims 13 to 19, wherein the control module is configured to:
extract the direct current voltage oscillation amount from the direct current voltage, and extract the direct current power oscillation amount from the direct current power by means of low-pass filtering, high-pass filtering, amplitude compensation and power compensation.

21. The power transmission system according to any one of claims 12 to 20, wherein the plurality of energy storage submodules are connected in series.

22. The power transmission system according to any one of claims 12 to 21, wherein the energy storage submodules comprise a power module and a battery module.

23. An apparatus for suppressing direct current oscillation in a power transmission system, comprising a processor and a memory, wherein the memory is configured to store a computer program, and the processor is configured to invoke the computer program to enable the apparatus to perform the method according to any one of claims 1 to 11.

24. A readable storage medium, wherein the readable storage medium stores a computer program which enables a computing device to perform the method according to any one of claims 1 to 11 when executed by the computing device.
